# EUROPEAN PATENT SPECIFICATION

(11) **EP 4 385 759 B1**
(45) Date of publication and mention of the grant of the patent: **26.02.2025**
(21) Application number: 23213584.8
(22) Date of filing: 01.12.2023
(51) Int. Cl.: B60C 5/14, B60C 3/04, B60C 9/02, B60C 9/00, B60C 11/00, B60C 9/04

(54) **TIRE**
REIFEN
PNEUMATIQUE

(30) Priority: 15.12.2022 JP 2022200222
(43) Date of publication of application: 19.06.2024
(73) Proprietor: Sumitomo Rubber Industries, Ltd., Kobe-shi, Hyogo 651-0072 (JP)
(72) Inventor: OJI, Takuya, Kobe-shi, Hyogo, 651-0072 (JP)
(74) Representative: Manitz Finsterwald Patent- und Rechtsanwaltspartnerschaft mbB

(56) References cited:
- EP-A1- 0 857 761
- EP-A1- 1 647 420
- EP-A1- 2 447 315
- EP-A1- 3 249 008
- EP-A2- 0 744 490
- WO-A1-2022/151623
- JP-A- 2016 196 220
- JP-A- 2020 037 330
- US-A1- 2009 308 517

## Description

### BACKGROUND OF THE INVENTION

### Field of the Invention

The present invention relates to a tire. Specifically, the present invention relates to a tire in which a steel cord is used as a carcass cord.

### Background Art

A carcass of a tire is composed of at least one carcass ply. The carcass ply includes a large number of carcass cords. In the case of a heavy duty tire used for a truck, a bus, or the like, steel cords are usually used as the carcass cords.

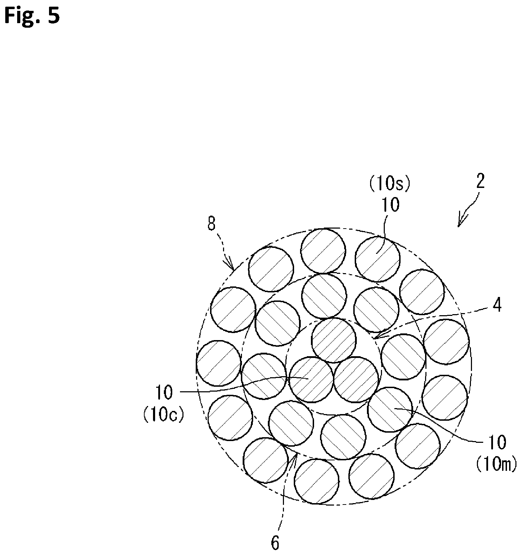

FIG. 5 shows an example of a carcass cord 2. The carcass cord 2 in FIG. 5 has a layer-twisted structure. The carcass cord 2 includes a core 4, an intermediate sheath 6, and an outer sheath 8. The core 4 is a strand. The core 4 is composed of three elemental wires 10 (hereinafter, core wires 10c). The intermediate sheath 6 includes 8 elemental wires 10 (hereinafter, intermediate sheath wires 10m). The outer sheath 8 includes 13 elemental wires 10 (hereinafter, outer sheath wires 10s). In the carcass cord 2 shown in FIG. 5, the core wires 10c, the intermediate sheath wires 10m, and the outer sheath wires 10s have the same outer diameter.

Although not shown, the twisting direction of the elemental wires 10 in the core 4 is S-twisting. The twisting direction of the elemental wires 10 in the intermediate sheath 6 is S-twisting. The twisting direction of the elemental wires 10 in the outer sheath 8 is Z-twisting.

As shown in FIG. 5, gaps exist between the adjacent intermediate sheath wires 10m in the intermediate sheath 6. Gaps exist between the adjacent outer sheath wires 10s in the outer sheath 8. Gaps also exist between the core 4 and the intermediate sheath 6 and between the intermediate sheath 6 and the outer sheath 8.

The carcass cord 2 includes a space therein. Although not shown, the carcass cord 2 is covered with a rubber in the tire. The rubber enters the interior of the carcass cord 2.

In the carcass cord 2 shown in FIG. 5, the sum of the intervals between the adjacent outer sheath wires 10s is larger than the outer diameter of the outer sheath wire 10s. The carcass cord 2 is also called an open cord. In contrast, a steel cord in which the sum of the intervals between the adjacent outer sheath wires 10s is smaller than the outer diameter of the outer sheath wire 10s is called a close cord. In an open cord, rubber is more likely to enter the interior thereof than in a close cord.

The inside of a tire is filled with air. The air contains moisture. If this moisture permeates into the interior of the tire and enters the interior of carcass cords, rust may form in the carcass cords. As described above, rubber is likely to enter an open cord. Therefore, in order to enhance the rust-prevention effect of the carcass cords, measures have been taken to prevent entry of water by using an open cord as each carcass cord and allowing rubber to enter the interior of the carcass cord. Japanese Laid-Open Patent Publication No. 2009-127160 discloses a tire in which such carcass cords are used.

Meanwhile, the initial elongation of an open cord is larger than that of a close cord. Therefore, in the case where an open cord is used as each carcass cord, if a groove is provided on each shoulder portion of a tire to decrease the thickness of the shoulder portion, there is a concern that the length of the carcass cord may differ between the portion where the groove is provided and the portion where the groove is not provided. The difference in the length of the carcass cord appears as irregularities (also called undulation) on the surface of the side portion when the tire is inflated. The undulation impairs the appearance quality of the tire.

For example, if thick sidewalls are used, occurrence of undulation can be suppressed. However, in this case, the mass of the tire increases. The increase in mass reduces the fuel economy of a vehicle. Therefore, establishment of a technology capable of suppressing occurrence of undulation without thickening the sidewalls is required.

The present invention has been made in view of such circumstances. An object of the present invention is to provide a tire that can effectively suppress occurrence of undulation with an increase in the mass thereof being minimized, while maintaining a rust-prevention effect of a carcass cord. Related technology is known from EP O 744 490 A2.

### SUMMARY OF THE INVENTION

The present invention is set out in the appended claims and directed to a tire including: a pair of beads; a carcass extending on and between a first bead and a second bead out of the pair of beads; and an inner liner located inward of the carcass. The carcass includes a carcass ply, and the carcass ply includes a carcass cord. The carcass cord is a steel cord. The carcass cord includes an outer sheath forming an outer circumferential surface thereof. The outer sheath includes a plurality of outer sheath wires. The plurality of outer sheath wires are aligned along an outer circumference of the carcass cord, and a sum of intervals between the adjacent outer sheath wires is smaller than an outer diameter of the outer sheath wire. The inner liner forms an inner surface of the tire, and an air permeability coefficient of the inner liner is not greater than 12 × 10⁻¹¹ cc·cm/cm²·sec ·cm Hg.

The present invention can provide a tire that can effectively suppress occurrence of undulation with an increase in the mass thereof being minimized, while maintaining a rust-prevention effect of a carcass cord.

### BRIEF DESCRIPTION OF THE DRAWINGS

FIG. 1 is a cross-sectional view showing a part of a heavy duty tire according to one embodiment of the present invention;
FIG. 2 is a cross-sectional view taken along a line II-II in FIG. 1;
FIG. 3 is a cross-sectional view showing a configuration of a carcass cord;
FIG. 4 is a perspective view showing the configuration of the carcass cord; and
FIG. 5 is a cross-sectional view showing a configuration of a conventional carcass cord.

### DETAILED DESCRIPTION

Hereinafter, the present invention will be described in detail based on preferred embodiments with appropriate reference to the drawings.

The tire of the present invention is fitted on a rim. The interior of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a standardized rim, the internal pressure of the tire is adjusted to a standardized internal pressure, and no load is applied to the tire is referred to as a standardized state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cut plane of the tire obtained by cutting the tire along a plane including a rotation axis. In this measurement, the tire is set such that the distance between right and left beads is equal to the distance between the beads in the tire that is fitted on the standardized rim. The configuration of the tire that cannot be confirmed in a state where the tire is fitted on the standardized rim is confirmed in the above-described cut plane.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

A center portion of the tread portion is also referred to as crown portion. A portion of the tread portion at an end thereof is also referred to as shoulder portion. A boundary portion between the tread portion and each sidewall portion is also referred to as buttress.

In the present invention, a rubber composition refers to a composition that is obtained by mixing a base rubber and chemicals in a kneading machine such as a Banbury mixer and that contains the uncrosslinked base rubber. A crosslinked rubber refers to a crosslinked product, of the rubber composition, obtained by pressurizing and heating the rubber composition. The crosslinked rubber contains a crosslinked product of the base rubber. The crosslinked rubber is also referred to as vulcanized rubber, and the rubber composition is also referred to as unvulcanized rubber.

Examples of the base rubber include natural rubber (NR), butadiene rubber (BR), styrene-butadiene rubber (SBR), isoprene rubber (IR), ethylene-propylene rubber (EPDM), chloroprene rubber (CR), acrylonitrile-butadiene rubber (NBR), and isobutylene-isoprene-rubber (IIR). Examples of the chemicals include reinforcing agents such as carbon black and silica, plasticizers such as aromatic oil, fillers such as zinc oxide, lubricants such as stearic acid, antioxidants, processing aids, sulfur, and vulcanization accelerators. Selection of a base rubber and chemicals, the amounts of the selected chemicals, etc., are determined as appropriate according to the specifications of components, such as a tread and a sidewall, for which the rubber composition is used. In the present invention, unless otherwise specified, a rubber composition that is generally used in tires is used.

In the present invention, an air permeability coefficient of a component formed from a crosslinked rubber, of the components of the tire, is measured according to the standards of JIS K6275-1. The measurement conditions are as follows. The air permeability coefficient in the present invention is an air permeability coefficient measured by a differential-pressure method in an environment of 60°C.
Device = gas permeability measuring device "G2700" manufactured by Yanaco Analytical Systems Inc.
Test gas = air
Test temperature = 60°C

### [Outline of Embodiments of Present Invention]

### [Configuration 1]

A tire according to one aspect of the present invention includes: a pair of beads; a carcass extending on and between a first bead and a second bead out of the pair of beads; and an inner liner located inward of the carcass, wherein the carcass includes a carcass ply, the carcass ply includes a carcass cord, the carcass cord is a steel cord, the carcass cord includes an outer sheath forming an outer circumferential surface thereof, the outer sheath includes a plurality of outer sheath wires, the plurality of outer sheath wires are aligned along an outer circumference of the carcass cord, a sum of intervals between the adjacent outer sheath wires is smaller than an outer diameter of the outer sheath wire, the inner liner forms an inner surface of the tire, and an air permeability coefficient of the inner liner is not greater than 12 × 10⁻¹¹ cc·cm/cm²·sec·cm Hg.

By forming the tire as described above, the length of the carcass cord is less likely to differ over the entire tire. For example, even if a groove is provided on each shoulder portion of the tire so as to extend in a direction along the carcass cord, the length of the carcass cord is less likely to differ between the portion where the groove is provided and the portion where the groove is not provided. The tire can effectively suppress occurrence of undulation. It is also unnecessary to take measures such as increasing the thickness of a component such as sidewalls to prevent occurrence of undulation. Since the inner liner has a low air permeability coefficient, the tire can also inhibit rust from forming in the carcass cord. The tire can effectively suppress occurrence of undulation with an increase in the mass thereof being minimized, while maintaining the rust-prevention effect of the carcass cord.

### [Configuration 2]

Preferably, in the tire described in [Configuration 1] above, the carcass cord is covered with a topping rubber, and an entry ratio of the topping rubber in the carcass cord is less than 30%.

By forming the tire as described above, the carcass cord can effectively contribute to suppressing occurrence of undulation.

### [Configuration 3]

Preferably, in the tire described in [Configuration 1] or [Configuration 2] above, in a state where the tire is fitted on a standardized rim, an internal pressure of the tire is adjusted to a standardized internal pressure, and no load is applied to the tire, a ratio of a cross-sectional height of the tire to a cross-sectional width of the tire is not less than 90%.

By forming the tire as described above, occurrence of undulation is effectively suppressed with an increase in mass being minimized, while maintaining the rust-prevention effect of the carcass cord.

### [Configuration 4]

Preferably, in the tire described in any one of [Configuration 1] to [Configuration 3] above, the carcass cord includes an intermediate sheath inside the outer sheath, the intermediate sheath includes a plurality of intermediate sheath wires, the plurality of intermediate sheath wires are aligned along the outer sheath, and a twisting direction of the intermediate sheath wires in the intermediate sheath is the same as a twisting direction of the outer sheath wires in the outer sheath.

By forming the tire as described above, the intermediate sheath wires and the outer sheath wires are in sufficient contact with each other as compared to a carcass cord in which the twisting direction of the intermediate sheath wires in the intermediate sheath and the twisting direction of the outer sheath wires in the outer sheath are opposite to each other. Since the strength of the carcass cord is increased as a whole, the tire can suppress occurrence of sidewall concussion. Moreover, since the internal space of the carcass cord is further reduced, this carcass cord can more effectively contribute to suppressing occurrence of undulation. Since the inner liner has a low air permeability coefficient, even if this carcass cord is used, rust is sufficiently inhibited from forming in the carcass cord. The tire can effectively suppress occurrence of undulation with an increase in the mass thereof being minimized, while maintaining the rust-prevention effect of the carcass cord.

### [Configuration 5]

More preferably, in the tire described in [Configuration 4] above, the carcass cord includes a core at a center of the carcass cord, the intermediate sheath is located between the core and the outer sheath, the core is composed of one core wire, a number of the intermediate sheath wires included in the intermediate sheath is 6, a number of the outer sheath wires included in the outer sheath is 12, and the core wire, the intermediate sheath wires, and the outer sheath wires have the same outer diameter.

By forming the tire as described above, in the case where the twisting direction of the intermediate sheath wires in the intermediate sheath is the same as the twisting direction of the outer sheath wires in the outer sheath, the elemental wires included in the carcass cord are more compactly bundled, and a carcass cord having a smaller internal space is formed. This carcass cord can effectively contribute to suppressing occurrence of undulation. Since the inner liner has a low air permeability coefficient, even if this carcass cord is used, rust is sufficiently inhibited from forming in the carcass cord. The tire can effectively suppress occurrence of undulation with an increase in the mass thereof being minimized, while maintaining the rust-prevention effect of the carcass cord.

### [Configuration 6]

Preferably, in the tire described in any one of [Configuration 1] to [Configuration 5] above, a thickness of a rubber component located between the carcass cord and the inner surface of the tire is not less than 4.5 mm.

By forming the tire as described above, moisture existing in a space between the tire and a rim is inhibited from permeating into the interior of the tire. Since the opportunity for the carcass cord to come into contact with moisture is reduced, rust is inhibited from forming in the carcass cord.

### [Details of Embodiments of Present Invention]

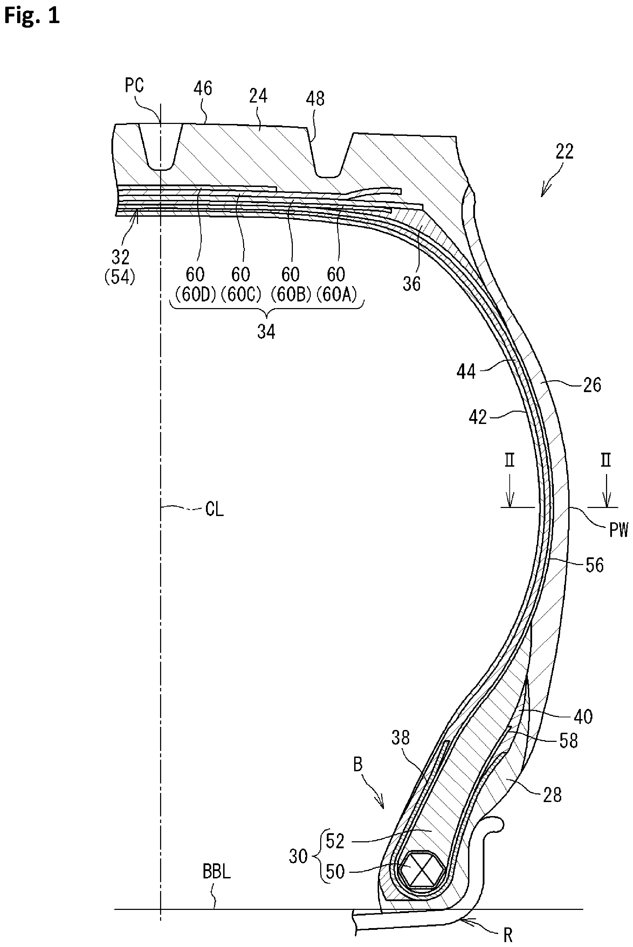

FIG. 1 shows a part of a tire 22 according to one embodiment of the present invention. The tire 22 is mounted to a vehicle such as a truck and a bus. The tire 22 is a heavy duty tire.

FIG. 1 shows a part of a cross-section (hereinafter, meridian cross-section) of the tire 22 taken along a plane including the rotation axis of the tire 22. In FIG. 1, the right-left direction is the axial direction of the tire 22, and the up-down direction is the radial direction of the tire 22. The direction perpendicular to the surface of the drawing sheet of FIG. 1 is the circumferential direction of the tire 22. In FIG. 1, an alternate long and short dash line CL extending in the radial direction represents the equator plane of the tire 22.

In FIG. 1, the tire 22 is fitted on a rim R (standardized rim). In FIG. 1, a solid line BBL extending in the axial direction is a bead base line. The bead base line BBL is a line that defines the rim diameter (see JATMA or the like) of the rim R.

The tire 22 includes a tread 24, a pair of sidewalls 26, a pair of chafers 28, a pair of beads 30, a carcass 32, a belt 34, a pair of cushion layers 36, a pair of steel reinforcing layers 38, a pair of interlayer strips 40, an inner liner 42, and an insulation 44.

The tread 24 is located radially outward of the carcass 32. The tread 24 comes into contact with a road surface at a tread surface 46 thereof. Grooves 48 are formed on the tread 24. The tread 24 is formed from a crosslinked rubber.

In FIG. 1, a position indicated by reference character PC is an equator. The equator PC is the point of intersection of the tread surface 46 and the equator plane CL. In the case where the groove 48 is located on the equator plane CL as in the tire 22, the equator PC is specified on the basis of a virtual tread surface obtained on the assumption that the groove 48 is not provided thereon.

The distance in the radial direction from the bead base line BBL to the equator PC, obtained in the tire 22 in the standardized state, is the cross-sectional height (see JATMA or the like) of the tire 22.

Each sidewall 26 is connected to an end of the tread 24. The sidewall 26 is located radially inward of the tread 24. The sidewall 26 is located axially outward of the carcass 32. The sidewall 26 is formed from a crosslinked rubber.

A position indicated by reference character PW is an axially outer end (hereinafter, outer end PW) of the tire 22. In the case where decorations such as patterns and letters are present on the outer surface of the tire 22, the outer end PW is specified on the basis of a virtual outer surface obtained on the assumption that the decorations are not present thereon. The tire 22 has a maximum width at the outer end PW. The outer end PW is also referred to as maximum width position.

The distance in the axial direction from a first outer end PW to a second outer end PW (not shown), obtained in the tire 22 in the standardized state, is the cross-sectional width (see JATMA or the like) of the tire 22.

In the standardized state of the tire 22, the ratio of the cross-sectional height of the tire 22 to the cross-sectional width of the tire 22 is not less than 90%.

Each chafer 28 is located radially inward of the sidewall 26. The chafer 28 comes into contact with the rim R. The chafer 28 is formed from a crosslinked rubber.

Each bead 30 is located axially inward of the chafer 28. The bead 30 is located radially inward of the sidewall 26. The bead 30 includes a bead core 50 and an apex 52.

The bead core 50 extends in the circumferential direction. Although not shown, the bead core 50 includes a wire made of steel and wound in the circumferential direction. The apex 52 is located radially outward of the bead core 50. The apex 52 extends radially outward from the bead core 50. The apex 52 is tapered outward. The apex 52 is formed from a hard crosslinked rubber.

The carcass 32 is located inward of the tread 24, the pair of sidewalls 26, and the pair of chafers 28. The carcass 32 extends on and between the pair of beads 30, that is, a first bead 30 and a second bead 30 (not shown) out of the pair of beads 30. The carcass 32 of the tire 22 has a radial structure.

The carcass 32 includes at least one carcass ply 54. The carcass 32 of the tire 22 is composed of one carcass ply 54. The carcass ply 54 is turned up at each bead 30.

The carcass ply 54 includes a ply body 56 and a pair of turned-up portions 58. The ply body 56 extends between the pair of beads 30. Each turned-up portion 58 is connected to the ply body 56 and turned up at the bead 30. Each turned-up portion 58 of the tire 22 is turned up from the inner side toward the outer side in the axial direction at the bead 30. An end of the turned-up portion 58 is located radially inward of an outer end of the apex 52.

The belt 34 is located between the tread 24 and the carcass 32 in the radial direction. The belt 34 of the tire 22 is stacked on the carcass 32.

The belt 34 includes a plurality of belt plies 60 aligned in the radial direction. The belt 34 of the tire 22 includes four belt plies 60. The four belt plies 60 are a first belt ply 60A, a second belt ply 60B, a third belt ply 60C, and a fourth belt ply 60D. Among the four belt plies 60, the first belt ply 60A is located on the innermost side in the radial direction.

In the tire 22, the second belt ply 60B has a largest width, and the fourth belt ply 60D has a smallest width.

Each belt ply 60 includes a large number of belt cords aligned with each other, which are not shown. These belt cords are covered with a topping rubber. Each belt cord is tilted relative to the equator plane CL. A steel cord is used as each belt cord of the tire 22.

Each cushion layer 36 is located between the belt 34 and the carcass 32 at an end of the belt 34. The cushion layer 36 is formed from a flexible crosslinked rubber.

Each steel reinforcing layer 38 is located in a bead portion B. The steel reinforcing layer 38 is located between the chafer 28 and the carcass 32. The steel reinforcing layer 38 is turned up at the bead 30. The steel reinforcing layer 38 is placed so as to wrap a radially inner portion of the bead 30 from the radially inner side of the turned-up portion 58. The entire steel reinforcing layer 38 is located radially inward of the end of the turned-up portion 58.

The steel reinforcing layer 38 includes a large number of filler cords aligned with each other, which are not shown. These filler cords are covered with a topping rubber. Each filler cord is tilted relative to the radial direction. A steel cord is used as each filler cord of the tire 22.

Each interlayer strip 40 is located between the chafer 28 and the apex 52 of the bead 30 in the axial direction. The interlayer strip 40 covers the end of the turned-up portion 58 and an outer end of the steel reinforcing layer 38. The interlayer strip 40 is formed from a crosslinked rubber.

The inner liner 42 is located inward of the carcass 32. The inner liner 42 forms an inner surface of the tire 22.

The inner liner 42 is formed from a crosslinked rubber that has an excellent air blocking property. From the viewpoint that the inner liner 42 can have a property of being less permeable to air, the rubber composition for the inner liner 42 preferably contains a butyl-based rubber as a base rubber.

Examples of the butyl-based rubber include halogenated isobutylene-isoprene-rubber (X-IIR) and isobutylene-isoprene-rubber (IIR) such as brominated isobutylene-isoprene-rubber (Br-IIR) and chlorinated isobutylene-isoprene-rubber (Cl-IIR). Among these butyl-based rubbers, Cl-IIR and IIR are particularly preferable. As the rubber composition for the inner liner 42, one butyl-based rubber may be used alone, or two or more butyl-based rubbers may be used in combination.

The base rubber of the rubber composition for the inner liner 42 can also contain a rubber component other than the butyl-based rubber. The rubber component other than the butyl-based rubber is, for example, natural rubber.

From the viewpoint of obtaining an inner liner 42 having a low air permeability coefficient, the content of the butyl-based rubber contained in the base rubber of the rubber composition is preferably not less than 80% by mass and not greater than 100% by mass, and more preferably not less than 85% by mass and not greater than 100% by mass.

In addition to the base rubber, the rubber composition for the inner liner 42 can contain the above-described chemicals such as carbon black and fillers.

In order to obtain an inner liner 42 having a low air permeability coefficient, the rubber composition for the inner liner 42 may be subjected to degassing treatment. The degassing treatment is, for example, degassing treatment, using a bent extruder, described in Japanese Patent No. 6438437.

The insulation 44 is located between the inner liner 42 and the carcass 32. The insulation 44 is formed from a crosslinked rubber that has excellent adhesiveness. The insulation 44 is jointed to the carcass 32 and also to the inner liner 42. The inner liner 42 of the tire 22 is joined to the inner surface of the carcass 32 via the insulation 44.

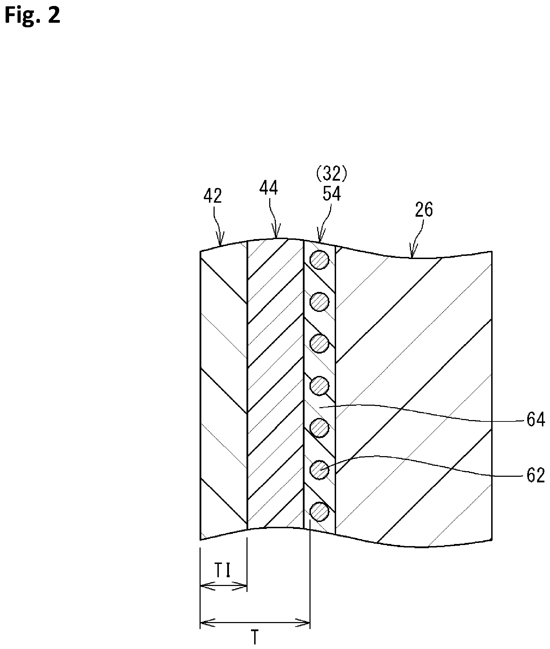

FIG. 2 shows a cross-section along a line II-II in FIG. 1. In FIG. 1, the line II-II passes through the maximum width position PW and extends in the axial direction. FIG. 2 shows a cross-section of the tire 22 at the maximum width position PW.

As shown in FIG. 2, the carcass ply 54 of the tire 22 includes a large number of carcass cords 62 aligned with each other. These carcass cords 62 are covered with a topping rubber 64. Although not shown, each carcass cord 62 intersects the equator plane CL. Each carcass cord 62 of the tire 22 is a steel cord.

As will be described later, steel cords each having a structure that is generally used as carcass cords for tires is used as the carcass cords 62 of the tire 22. Among them, close cords are suitably used. Among the close cords, compact cords are suitably used as the carcass cords 62.

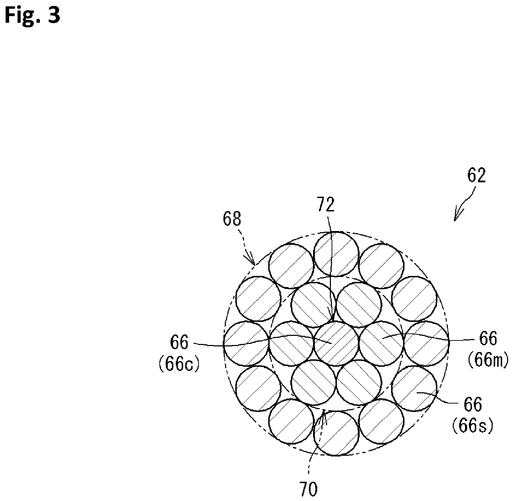

FIG. 3 shows a cross-section of the carcass cord 62. The carcass cord 62 includes a plurality of elemental wires 66. The carcass cord 62 in FIG. 3 has a layer-twisted structure. In other words, the carcass cord 62 is a steel cord having a layer-twisted structure.

The carcass cord 62 includes an outer sheath 68. The outer sheath 68 forms the outer circumferential surface of the carcass cord 62.

The outer sheath 68 includes a plurality of elemental wires 66. The elemental wires 66 included in the outer sheath 68 are also referred to as outer sheath wires 66s.

The outer sheath 68 of the carcass cord 62 shown in FIG. 3 includes 12 outer sheath wires 66s. The number of outer sheath wires 66s included in the outer sheath 68 may be 11 or less, or may be 13 or more. The number of outer sheath wires 66s included in the outer sheath 68 is determined as appropriate according to the characteristics required for the carcass cord 62.

As shown in FIG. 3, the plurality of outer sheath wires 66s are aligned along the outer circumference of the carcass cord 62. The outer sheath 68 includes the plurality of outer sheath wires 66s, and the plurality of outer sheath wires 66s are aligned along the outer circumference of the carcass cord 62.

In the tire 22, the plurality of outer sheath wires 66s are closely aligned in the outer sheath 68. There are no gaps between the adjacent outer sheath wires 66s, but even if there are gaps therebetween, the size of each of the gaps is such that the sum of all the gaps in the outer sheath 68 does not allow an outer sheath wire 66s to be further added to the outer sheath 68.

In the tire 22, when the distance, between two outer sheath wires 66s, measured along a straight line connecting the centers of the adjacent outer sheath wires 66s, is defined as an interval between the adjacent outer sheath wires 66s, the sum of the intervals between the adjacent outer sheath wires 66s is smaller than the outer diameter of the outer sheath wire 66s. The carcass cord 62 is a close cord. The initial elongation of the carcass cord 62 is smaller than that of a carcass cord that is an open cord. Therefore, the length of the carcass cord 62 is less likely to differ over the entire tire 22. For example, even if a groove is provided on each shoulder portion of the tire 22 so as to extend in a direction along the carcass cord 62, the length of the carcass cord 62 is less likely to differ between the portion where the groove is provided and the portion where the groove is not provided. The tire 22 can effectively suppress occurrence of undulation.

It is not necessary to use a thick sidewall as each sidewall 26 to prevent occurrence of undulation. Therefore, the tire 22 can maintain the mass thereof. Even if the mass increases, the tire 22 can minimize the mass increase. The tire 22 can effectively suppress occurrence of undulation with an increase in the mass thereof being minimized.

The internal space of the close cord is narrower than the internal space of the open cord. In particular, the plurality of outer sheath wires 66s included in the outer sheath 68 are closely aligned. Therefore, rubber is less likely to enter into the interior of the carcass cord 62, which is a close cord, than into the interior of the open cord. Therefore, there is a concern that water contained in the air with which the interior of the tire 22 is filled may accumulate inside the carcass cord 62, causing rust to form in the carcass cord 62.

However, the inner liner 42 of the tire 22 is formed from a crosslinked rubber that is less permeable to air. Specifically, the air permeability coefficient of the inner liner 42 is not greater than 12 × 10⁻¹¹ cc·cm/cm²·sec·cm Hg. The inner liner 42 suppresses entry of moisture into the interior of the tire 22. Water is less likely to accumulate inside each carcass cord 62 of the tire 22. The tire 22 can inhibit rust from forming in the carcass cord 62. The tire 22 can effectively suppress occurrence of undulation with an increase in the mass thereof being minimized, while maintaining the rust-prevention effect of the carcass cord 62.

As described above, the air permeability coefficient of the inner liner 42 is not greater than 12 × 10⁻¹¹ cc·cm/cm²·sec·cm Hg. From the viewpoint of being able to improve the rust-prevention effect of the carcass cord 62, the air permeability coefficient of the inner liner 42 is preferably not greater than 9.5 × 10⁻¹¹ cc·cm/cm²·sec·cm Hg.

As described above, the carcass cords 62 are covered with the topping rubber 64. Each carcass cord 62 is a close cord, and the internal space of the close cord is narrower than the internal space of the open cord. Therefore, rubber is less likely to enter into the interior of the carcass cord 62 than into the interior of the open cord.

In the present invention, an entry ratio of the topping rubber in the carcass cord is obtained as follows. A carcass cord having a length of about 10 cm (hereinafter, referred to as rubberized cord) is taken out from the tire in a state where the topping rubber adheres thereto. After removing as much rubber as possible from the surface of the rubberized cord, a knife is inserted through the cross-section of the cord, and two adjacent elemental wires out of the elemental wires of the outer sheath are removed. A portion where the gap formed between the removed two elemental wires and the intermediate sheath is completely filled with rubber is confirmed, and the length of this portion is measured. The ratio of the length of the portion filled with rubber to the entire length (hereinafter, also referred to as rubber entry ratio) is calculated. In the present invention, 10 rubberized cords are taken out from the tire, and the rubber entry ratio is obtained for each of the rubberized cords. The average of the 10 rubber entry ratios is used as an entry ratio of the topping rubber in the carcass cord.

In the tire 22, the entry ratio of the topping rubber 64 in the carcass cord 62 is less than 30%. The internal space of the carcass cord 62 is much narrower than that of the open cord. The narrow internal space contributes to a reduction in the initial elongation of the carcass cord 62. The carcass cord 62 can effectively contribute to suppressing occurrence of undulation. From this viewpoint, the entry ratio is preferably not greater than 25%.

As shown in FIG. 3, the carcass cord 62 includes an intermediate sheath 70 inside the outer sheath 68.

The intermediate sheath 70 includes a plurality of elemental wires 66. The elemental wires 66 included in the intermediate sheath 70 are also referred to as intermediate sheath wires 66m.

The intermediate sheath 70 of the carcass cord 62 shown in FIG. 3 includes 6 intermediate sheath wires 66m. The number of intermediate sheath wires 66m included in the intermediate sheath 70 may be 5 or less, or may be 7 or more. The number of intermediate sheath wires 66m included in the intermediate sheath 70 is determined as appropriate according to the characteristics required for the carcass cord 62.

As shown in FIG. 3, the plurality of intermediate sheath wires 66m are aligned along the outer sheath 68 of the carcass cord 62. The intermediate sheath 70 includes the plurality of intermediate sheath wires 66m, and the plurality of intermediate sheath wires 66m are aligned along the outer sheath 68.

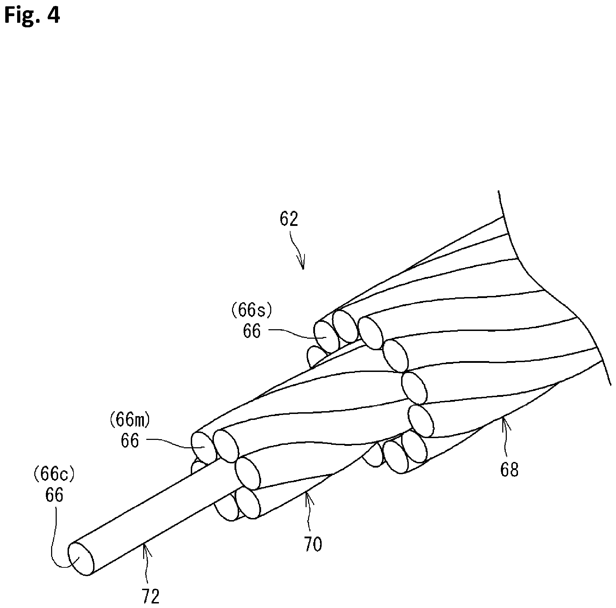

FIG. 4 shows a part of the carcass cord 62 shown in FIG. 3. In the carcass cord 62, the plurality of outer sheath wires 66s included in the outer sheath 68 are twisted in a predetermined direction. The plurality of intermediate sheath wires 66m included in the intermediate sheath 70 are also twisted in a predetermined direction.

As shown in FIG. 4, the twisting direction of the intermediate sheath wires 66m in the intermediate sheath 70 is the same as the twisting direction of the outer sheath wires 66s in the outer sheath 68. Accordingly, the elemental wires 66 included in the carcass cord 62 are more compactly bundled. In the carcass cord 62, the intermediate sheath wires 66m and the outer sheath wires 66s are in sufficient contact with each other as compared to a carcass cord in which the twisting direction of the intermediate sheath wires 66m in the intermediate sheath 70 is opposite to the twisting direction of the outer sheath wires 66s in the outer sheath 68. The contact area between the adjacent elemental wires increases, and the elemental wires can support each other, so that the strength of the carcass cord 62 is increased as a whole. Occurrence of break of the carcass cord in each side portion of the tire 22 (also referred to as sidewall concussion) is suppressed. Moreover, since the internal space of the carcass cord 62 is further reduced, the carcass cord 62 has a smaller initial elongation. The carcass cord 62 can more effectively contribute to suppressing occurrence of undulation. Since the inner liner 42 having a low air permeability coefficient effectively suppresses entry of moisture into the interior of the tire 22, even when the carcass cord 62 in which the elemental wires 66 are compactly bundled is used, rust is sufficiently inhibited from forming in the carcass cord 62.

The tire 22 can effectively suppress occurrence of undulation with an increase in the mass thereof being minimized, while maintaining the rust-prevention effect of the carcass cord 62. From this viewpoint, in the case where the carcass cord 62 includes the intermediate sheath 70 inside the outer sheath 68, preferably, the intermediate sheath 70 includes the plurality of intermediate sheath wires 66m, the plurality of intermediate sheath wires 66m are aligned along the outer sheath 68, and the twisting direction of the intermediate sheath wires 66m in the intermediate sheath 70 is the same as the twisting direction of the outer sheath wires 66s in the outer sheath 68.

As shown in FIG. 3, the carcass cord 62 includes a core 72 at the center thereof. The above-described intermediate sheath 70 is located between the core 72 and the outer sheath 68.

In the carcass cord 62, one intermediate sheath 70 is provided between the core 72 and the outer sheath 68, but a plurality of intermediate sheaths may be provided between the core 72 and the outer sheath 68 so as to be aligned in the radial direction of the carcass cord 62.

As shown in FIG. 3, the core 72 is composed of one elemental wire 66. In the tire 22, the elemental wire 66 forming the core 72 is also referred to as core wire 66c. The core 72 of the carcass cord 62 is composed of one core wire 66c.

The core 72 may be a strand including two or more core wires 66c. In this case, the strand is formed by twisting together the two or more core wires 66c.

In the tire 22, in the case where the carcass cord 62 includes the core 72 at the center thereof, the core 72 is preferably composed of one core wire 66c. Accordingly, the elemental wires 66 included in the carcass cord 62 are more compactly bundled, and a carcass cord 62 having a smaller internal space is formed. This carcass cord 62 can effectively contribute to suppressing occurrence of undulation.

The carcass cord 62 includes the core 72, the intermediate sheath 70, and the outer sheath 68. The core 72 is composed of the one core wire 66c, the number of intermediate sheath wires 66m included in the intermediate sheath 70 is 6, and the number of outer sheath wires 66s included in the outer sheath 68 is 12. The core wire 66c, the intermediate sheath wires 66m, and the outer sheath wires 66s have the same outer diameter. The cord structure of the carcass cord 62 is represented by "1 + 6 + 12".

In the carcass cord 62 having a cord structure represented by "1 + 6 + 12", in the case where the twisting direction of the intermediate sheath wires 66m in the intermediate sheath 70 is the same as the twisting direction of the outer sheath wires 66s in the outer sheath 68, the elemental wires 66 included in the carcass cord 62 are more compactly bundled, and a carcass cord 62 having a smaller internal space is formed. The carcass cord 62 can more effectively contribute to suppressing occurrence of undulation. From this viewpoint, in the case where the carcass cord 62 includes the core 72, the intermediate sheath 70, and the outer sheath 68 and the twisting direction of the intermediate sheath wires 66m in the intermediate sheath 70 is the same as the twisting direction of the outer sheath wires 66s in the outer sheath 68, preferably, the core 72 is composed of the one core wire 66c, the number of intermediate sheath wires 66m included in the intermediate sheath 70 is 6, the number of outer sheath wires 66s included in the outer sheath 68 is 12, and the core wire 66c, the intermediate sheath wires 66m, and the outer sheath wires 66s have the same outer diameter.

As shown in FIG. 2, the topping rubber 64 of the carcass ply 54, the insulation 44, and the inner liner 42 are located between the carcass cord 62 and the inner surface of the tire 22. In FIG. 2, a length indicated by a double-headed arrow T is the thickness of a rubber component formed by the topping rubber 64, the insulation 44, and the inner liner 42, which are located between the carcass cord 62 and the inner surface of the tire 22. The thickness T is represented as the shortest distance from the carcass cord 62 to the inner surface of the tire 22.

As described above, the cross-section of the tire 22 shown in FIG. 2 is the cross-section of the tire 22 at the maximum width position PW. Therefore, the thickness T of the rubber component shown in FIG. 2 is the thickness of the rubber component, located between the carcass cord 62 and the inner surface of the tire 22, at the maximum width position PW.

In the tire 22, the thickness T of the rubber component located between the carcass cord 62 and the inner surface of the tire 22 is preferably not less than 4.5 mm. Accordingly, the moisture existing in the space between the tire 22 and the rim R is inhibited from permeating into the interior of the tire 22. Since the opportunity for the carcass cord 62 to come into contact with moisture is reduced, rust is inhibited from forming in the carcass cord 62. The rubber component located between the carcass cord 62 and the inner surface of the tire 22 can effectively contribute to improving the rust-prevention effect of the carcass cord 62. Since the carcass cord 62 is less likely to rust, the properties of the carcass cord 62 are stably maintained. The tire 22 can also improve sidewall concussion resistance.

From the viewpoint of being able to suppress the influence of the rubber component on the mass of the tire 22, the thickness T of the rubber component is preferably not greater than 6.0 mm.

In FIG. 2, a length indicated by a double-headed arrow TI is the thickness of the inner liner 42 at the maximum width position PW.

From the viewpoint that the inner liner 42 having a low air permeability coefficient can effectively contribute to the rust-prevention effect of the carcass cord 62, the ratio (TI/T) of the thickness TI of the inner liner 42 to the thickness T of the rubber component is preferably not less than 0.3. From the viewpoint of being able to suppress the influence of the inner liner 42 on the mass of the tire 22, the ratio (TI/T) is preferably not greater than 0.5.

As is obvious from the above description, according to the present invention, a tire that can suppress occurrence of undulation without increasing the mass thereof, while maintaining a rust-prevention effect of a carcass cord, is obtained. Although the present invention has been described based on the heavy-duty tire, the tire to which the present invention is applicable is not particularly limited as long as a steel cord is used as each carcass cord. The tire to which the present invention is applicable may be, for example, a tire for a passenger car, or a tire for a small truck. In particular, the present invention exhibits a remarkable effect in the case where the ratio of the cross-sectional height of the tire 22 to the cross-sectional width of the tire 22 in the standardized state is not less than 90%.

### EXAMPLES

Hereinafter, the present invention will be described in further detail by means of examples, etc., but the present invention is not limited to these examples.

### [Example 1]

A heavy duty tire (tire size =325/95R24) having the basic structure shown in FIG. 1 and having specifications shown in Table 1 below was obtained.

The steel cord (close cord) shown in FIG. 3 was used as each carcass cord. The structure of this carcass cord was "1 × 0.25 + 6 + 12 × 0.225".

The twisting direction of the intermediate sheath wires in the intermediate sheath and the twisting direction of the outer sheath wires in the outer sheath were both "Z-twisting".

The inner liner was formed using a rubber composition subjected to degassing treatment. The air permeability coefficient of the inner liner was 9.5 × 10⁻¹¹ cc·cm/cm²·sec·cm Hg. This is represented as "L" in the cell for "Inner liner" in Table 1 below.

The thickness T of the rubber component at the maximum width position was set to 4.5 mm.

### [Comparative Example 1]

A tire of Comparative Example 1 was obtained in the same manner as Example 1, except that the carcass cord, the inner liner, and the thickness T of the rubber component were set as shown in Table 1 below.

The steel cord (open cord) shown in FIG. 5 was used as each carcass cord. The structure of this carcass cord was "3 + 8 + 13 × 0.23".

The twisting direction of the core wires in the core and the twisting direction of the intermediate sheath wires in the intermediate sheath were "S-twisting", and the twisting direction of the outer sheath wires in the outer sheath was "Z-twisting".

The inner liner was formed using a rubber composition that had not been subjected to degassing treatment. The configuration of the rubber composition used for forming the inner liner is the same as that of the rubber composition used in Example 1. The air permeability coefficient of the inner liner was 15 × 10⁻¹¹ cc·cm/cm²·sec·cm Hg. This is represented as "H" in the cell for "Inner liner" in Table 1 below.

The thickness T of the rubber component at the maximum width position was set to 4.0 mm by adjusting the thickness TI of the inner liner.

### [Rust-Prevention Performance]

Each test tire was fitted onto a rim (size = 22.5 × 24), water (about 300 cc) was put into the inside of the tire, and then the tire was inflated with air to adjust the internal pressure thereof to 1000 kPa. After adjustment, the tire was allowed to stand for 20 days in an atmosphere in which the oxygen concentration was adjusted to 60% and the temperature was adjusted to 80°C. After the tire was allowed to stand, water (about 300 cc) was put into the inside of the tire, and the tire was inflated with air to adjust the internal pressure thereof to 900 kPa. The tire was mounted to a drum type tire testing machine, and a vertical load of 28.76 kN was applied to the tire. The tire was caused to run on a drum having a radius of 1.7 m at a speed of 80 km/h. After running a predetermined distance, the tire was dismantled and checked for the state of formation of rust in the carcass cord. The results are represented in Table 1 below as an index with the result of Comparative Example 1 being regarded as 100. The higher the value is, the more the formation of rust was suppressed.

### [Undulation]

Each test tire was fitted onto a rim (size = 22.5 × 24) and inflated with air to adjust the internal pressure thereof to 780 kPa. The tire was mounted to a drum type tire testing machine, and a vertical load of 39.23 kN was applied to the tire. The tire was caused to run on a drum having a radius of 1.7 m at a speed of 80 km/h. After running a predetermined distance, the surface of the tire was observed to check the state of occurrence of undulation. The results are represented in Table 1 below as an index with the result of Comparative Example 1 being regarded as 100. The higher the value is, the more the occurrence of undulation is suppressed.

### [Mass]

The mass of each test tire was measured. The results are represented in Table 1 below as an index with the result of Comparative Example 1 being regarded as 100. The higher the value is, the lighter the tire is.

### [Concussion]

Each test tire was fitted onto a rim (size = 22.5 × 24) and inflated with air to adjust the internal pressure thereof to 800 kPa. A weight having a blade was dropped toward the buttress of the tire while changing the height position of the weight, until the carcass cord was broken, and the height at which the carcass cord was broken was obtained. The fracture energy was calculated on the basis of this height. The results are represented in Table 1 below as an index with the result of Comparative Example 1 being regarded as 100. The higher the value is, the better the sidewall concussion resistance is. The mass of the weight was 33 kg. The length of the blade was 3 cm.

**[Table 1]**

| | | Comparative Example 1 | Example 1 |
|---|---|---|---|
| Inner liner | | H | L |
| T [mm] | | 4.0 | 4.5 |
| Carcass cord | | Open | Close |
| Twisting direction | Outer sheath | Z | Z |
| | Intermediate sheath | S | Z |
| Rust-prevention performance | | 100 | 105 |
| Undulation | | 100 | 120 |
| Mass | | 100 | 100 |
| Concussion | | 100 | 115 |

As shown in Table 1, in Example 1, the occurrence of undulation is suppressed without increasing the mass, while increasing the rust-prevention effect of the carcass cord. From the evaluation results, advantages of the present invention are clear.

The above-described technology capable of suppressing occurrence of undulation without increasing the mass, while maintaining a rust-prevention effect of a carcass cord, can be applied to various tires.

## Claims

1. A tire (22) comprising:
a pair of beads (30);
a carcass (32) extending on and between a first bead (30) and a second bead (30) out of the pair of beads (30); and
an inner liner (42) located inward of the carcass (32), wherein
the carcass (32) includes a carcass ply (54),
the carcass ply (54) includes a carcass cord (62),
the carcass cord (62) is a steel cord,
the carcass cord (62) includes an outer sheath (68) forming an outer circumferential surface thereof,
the outer sheath (68) includes a plurality of outer sheath wires (66s),
the plurality of outer sheath wires (66s) are aligned along an outer circumference of the carcass cord (62),
a sum of intervals between the adjacent outer sheath wires (66s) is smaller than an outer diameter of the outer sheath wire (66s), wherein an interval between two adjacent outer sheath wires (66s) is defined as the distance, between the two outer sheath wires (66s), measured along a straight line connecting the centers of the two adjacent outer sheath wires (66s),
the inner liner (42) forms an inner surface of the tire (22),
**characterized in that**
an air permeability coefficient of the inner liner (42) is not greater than 12 × 10⁻¹¹ cc·cm/cm²·sec·cm Hg, wherein the air permeability coefficient is measured according to the standards of JIS K6275-1 with the following measurement conditions: measured by a differential-pressure method in an environment of 60°C using a gas permeability measuring device "G2700" manufactured by Yanaco Analytical Systems Inc with air as the test gas at a test temperature of 60°C;
the carcass cord (62) includes a core (72) at a center of the carcass cord (62), and an intermediate sheath (70) located between the core (72) and the outer sheath (68),
wherein
the core (72) is composed of one core wire (66c),
a number of the intermediate sheath wires (66m) included in the intermediate sheath (70) is 6,
a number of the outer sheath wires (66s) included in the outer sheath (68) is 12, and
the core wire (66c), the intermediate sheath wires (66m), and the outer sheath wires (66s) have the same outer diameter,
the plurality of intermediate sheath wires (66m) are aligned along the outer sheath (68), and
a twisting direction of the intermediate sheath wires (66m) in the intermediate sheath (70) is the same as a twisting direction of the outer sheath wires (66s) in the outer sheath (68).

2. The tire (22) according to claim 1, wherein
the carcass cord (62) is covered with a topping rubber (64), and
an entry ratio of the topping rubber (64) in the carcass cord (62) is less than 30%,
wherein the entry ratio of the topping rubber (64) in the carcass cord (62) is obtained as follows: a carcass cord (62) having a length of about 10 cm is taken out from the tire in a state where the topping rubber (64) adheres thereto; after removing as much rubber as possible from the surface of the carcass cord (62), a knife is inserted through the cross-section of the carcass cord (62), and two adjacent outer sheath wires (66s) of the outer sheath (68) are removed; a portion where the gap formed between the removed two outer sheath wires (66s) and the intermediate sheath (70) is completely filled with rubber is confirmed, and the length of this portion is measured; the ratio of the length of the portion filled with rubber to the entire length is calculated as a rubber entry ratio; 10 carcass cord (62) having a length of about 10 cm are taken out from the tire, and a rubber entry ratio is obtained for each of the 10 taken-out carcass cords (62), and the average of the 10 rubber entry ratios is used as the entry ratio of the topping rubber (64) in the carcass cord (62).

3. The tire (22) according to claim 1 or 2, wherein, in a state where the tire (22) is fitted on a standardized rim (R), an internal pressure of the tire (22) is adjusted to a standardized internal pressure, and no load is applied to the tire (22),
a ratio of a cross-sectional height of the tire (22) to a cross-sectional width of the tire (22) is not less than 90%.

4. The tire (22) according to any one of claims 1 to 3, wherein a thickness (T) of a rubber component located between the carcass cord (62) and the inner surface of the tire (22) is not less than 4.5 mm.

## Patentansprüche

1. Reifen (22), umfassend:
ein Paar Wülste (30);
eine Karkasse (32), die sich auf und zwischen einem ersten Wulst (30) und einem zweiten Wulst (30) aus dem Paar Wülste (30) erstreckt; und
einen Innerliner (42), der innen non der Karkasse (32) angeordnet ist, wobei
die Karkasse (32) eine Karkasslage (54) umfasst,
die Karkasslage (54) einen Karkasskord (62) umfasst,
der Karkasskord (62) ein Stahlkord ist,
der Karkasskord (62) eine äußere Ummantelung (68) umfasst, die eine äußere Umfangsoberfläche davon bildet,
die äußere Ummantelung (68) eine Vielzahl von äußeren Ummantelungsdrähten (66s) umfasst,
die Vielzahl von äußeren Ummantelungsdrähten (66s) entlang eines äußeren Umfangs des Karkasskords (62) ausgerichtet sind,
eine Summe von Intervallen zwischen den benachbarten äußeren Ummantelungsdrähten (66s) kleiner als ein Außendurchmesser des äußeren Ummantelungsdrahts (66s) ist, wobei ein Intervall zwischen zwei benachbarten äußeren Ummantelungsdrähten (66s) als der Abstand zwischen den zwei äußeren Ummantelungsdrähten (66s), gemessen entlang einer geraden Linie, die die Mitten der zwei benachbarten äußeren Ummantelungsdrähte (66s) verbindet, definiert ist,
der Innerliner (42) eine innere Oberfläche des Reifens (22) bildet, **dadurch gekennzeichnet, dass**
ein Luftdurchlässigkeitskoeffizient des Innerliners (42) nicht größer als 12 × 10⁻¹¹ cc·cm/cm²·s·cm Hg ist, wobei der Luftdurchlässigkeitskoeffizient gemäß den Standards von JIS K6275-1 mit den folgenden Messbedingungen gemessen wird: gemessen durch ein Differenzdruckverfahren in einer Umgebung von 60 °C unter Verwendung einer Gasdurchlässigkeitsmessvorrichtung "G2700", hergestellt von Yanaco Analytical Systems Inc., mit Luft als Testgas bei einer Testtemperatur von 60 °C,
der Karkasskord (62) einen Kern (72) in einer Mitte des Karkasskords (62) und eine Zwischenummantelung (70), die zwischen dem Kern (72) und der äußeren Ummantelung (68) angeordnet ist, umfasst, wobei
der Kern (72) aus einem Kerndraht (66c) zusammengesetzt ist,
eine Anzahl der Zwischenummantelungsdrähte (66m), die in der Zwischenummantelung (70) enthalten sind, 6 beträgt,
eine Anzahl der äußeren Ummantelungsdrähte (66s), die in der äu-βeren Ummantelung (68) enthalten sind, 12 beträgt, und
der Kerndraht (66c), die Zwischenummantelungsdrähte (66m) und die äußeren Ummantelungsdrähte (66s) den gleichen Außendurchmesser aufweisen,
die Vielzahl von Zwischenummantelungsdrähten (66m) entlang der äußeren Ummantelung (68) ausgerichtet sind, und
eine Verdrillungsrichtung der Zwischenummantelungsdrähte (66m) in der Zwischenummantelung (70) die gleiche wie eine Verdrillungsrichtung der äußeren Ummantelungsdrähte (66s) in der äußeren Ummantelung (68) ist.

2. Reifen (22) nach Anspruch 1, wobei
der Karkasskord (62) mit einem Deckgummi (64) bedeckt ist, und
ein Eintrittsverhältnis des Deckgummis (64) in den Karkasskord (62) weniger als 30 % beträgt,
wobei das Eintrittsverhältnis des Deckgummis (64) in den Karkasskord (62) wie folgt erhalten wird: ein Karkasskord (62) mit einer Länge von etwa 10 cm wird aus dem Reifen in einem Zustand herausgenommen, in dem der Deckgummi (64) daran haftet; nach dem Entfernen von so viel Gummi wie möglich von der Oberfläche des Karkasskords (62) wird ein Messer durch den Querschnitt des Karkasskords (62) eingeführt, und zwei benachbarte äußere Ummantelungsdrähte (66s) der äußeren Ummantelung (68) werden entfernt; ein Abschnitt, in dem der Spalt, der zwischen den entfernten zwei äußeren Ummantelungsdrähten (66s) und der Zwischenummantelung (70) gebildet ist, vollständig mit Gummi gefüllt ist, wird bestätigt, und die Länge dieses Abschnitts wird gemessen; das Verhältnis der Länge des Abschnitts, der mit Gummi gefüllt ist, zu der gesamten Länge wird als ein Gummieintrittsverhältnis berechnet; 10 Karkasskorde (62) mit einer Länge von etwa 10 cm werden aus dem Reifen herausgenommen, und ein Gummieintrittsverhältnis wird für jeden der 10 herausgenommenen Karkasskorde (62) erhalten, und der Durchschnitt der 10 Gummieintrittsverhältnisse wird als das Eintrittsverhältnis des Deckgummis (64) in den Karkasskord (62) verwendet.

3. Reifen (22) nach Anspruch 1 oder 2, wobei in einem Zustand, in dem der Reifen (22) auf eine standardisierte Felge (R) aufgezogen ist, ein Innendruck des Reifens (22) auf einen standardisierten Innendruck eingestellt wird, und keine Last auf den Reifen (22) ausgeübt wird,
ein Verhältnis einer Querschnittshöhe des Reifens (22) zu einer Querschnittsbreite des Reifens (22) nicht weniger als 90 % beträgt.

4. Reifen (22) nach einem der Ansprüche 1 bis 3, wobei eine Dicke (T) einer Gummikomponente, die zwischen dem Karkasskord (62) und der inneren Oberfläche des Reifens (22) angeordnet ist, nicht weniger als 4,5 mm beträgt.

## Revendications

1. Pneumatique (22) comprenant :
une paire de talons (30) ;
une carcasse (32) s'étendant sur et entre un premier talon (30) et un second talon (30) parmi la paire de talons (30) ; et
une doublure intérieure (42) située à l'intérieur de la carcasse (32), dans lequel
la carcasse (32) inclut une nappe de carcasse (54),
la nappe de carcasse (54) inclut un câblé de carcasse (62),
le câblé de carcasse (62) est un câblé en acier,
le câblé de carcasse (62) inclut une gaine extérieure (68) formant une surface circonférentielle extérieure de celui-ci,
la gaine extérieure (68) inclut une pluralité de fils de gaine extérieure (66s),
la pluralité de fils de gaine extérieure (66s) sont alignés le long d'une circonférence extérieure du câblé de carcasse (62),
une somme d'intervalles entre les fils de gaine extérieure adjacents (66s) est inférieure à un diamètre extérieur du fil de gaine extérieure (66s), un intervalle entre deux fils de gaine extérieure adjacents (66s) étant défini en tant que distance, entre les deux fils de gaine extérieure (66s), mesurée le long d'une ligne droite connectant les centres des deux fils de gaine extérieure adjacents (66s),
la doublure intérieure (42) forme une surface intérieure du pneumatique (22),
**caractérisé en ce que**
un coefficient de perméabilité à l'air de la doublure intérieure (42) n'est pas supérieur à 12 × 10⁻¹¹ cc·cm/cm²·s cm Hg, le coefficient de perméabilité à l'air étant mesuré selon les standards de la norme industrielle japonaise JIS K6275-1 avec les conditions de mesurage suivantes : mesuré par une méthode de différentiel de pression dans un environnement de 60 °C à l'aide d'un dispositif de mesurage de perméabilité au gaz « G2700) fabriqué par Yanaco Analytical Systems Inc avec de l'air à titre de gaz d'essai à une température d'essai de 60 °C ;
le câblé de carcasse (62) inclut une âme (72) à un centre du câblé de carcasse (62), et une gaine intermédiaire (70) située entre l'âme (72) et la gaine extérieure (68), dans lequel
l'âme (72) est composée d'un fil d'âme (66c),
un nombre des fils de gaine intermédiaire (66m) inclus dans la gaine intermédiaire (70) est de 6,
un nombre des fils de gaine extérieure (66s) inclus dans la gaine extérieure (68) est de 12, et
le fil d'âme (66c), les fils de gaine intermédiaire (66m), et les fils de gaine extérieure (66s) ont le même diamètre extérieur,
la pluralité de fils de gaine intermédiaire (66m) sont alignés le long de la gaine extérieure (68), et
une direction de torsade des fils de gaine intermédiaire (66m) dans la gaine intermédiaire (70) est la même qu'une direction de torsade des fils de gaine extérieure (66s) dans la gaine extérieure (68).

2. Pneumatique (22) selon la revendication 1, dans lequel
le câblé de carcasse (62) est recouvert d'un caoutchouc d'enrobage (64), et
un rapport d'entrée du caoutchouc d'enrobage (64) dans le câblé de carcasse (62) est inférieur à 30 %,
dans lequel le rapport d'entrée du caoutchouc d'enrobage (64) dans le câblé de carcasse (62) est obtenu comme suit : un câblé de carcasse (62) ayant une longueur d'environ 10 cm est extrait du pneumatique dans un état dans lequel le caoutchouc d'enrobage (64) adhère sur celui-ci ; après enlèvement d'autant de caoutchouc que possible de la surface du câblé de carcasse (62), une lame est insérée à travers la section transversale du câblé de carcasse (62), et deux fils de gaine extérieure adjacents (66s) de la gaine extérieure (68) sont enlevés ; une portion où l'intervalle formé entre les deux fils de gaine extérieure enlevés (66s) et la gaine intermédiaire (70) est complètement rempli de caoutchouc, est confirmée, et la longueur de cette portion est mesurée ; le rapport de la longueur de la portion remplie de caoutchouc sur la longueur entière est calculé en tant que rapport d'entrée de caoutchouc ;10 câblés de carcasse (62) ayant une longueur d'environ 10 cm sont extraits du pneumatique, et un rapport d'entrée de caoutchouc est obtenu pour chacun des 10 câblés de carcasse extraits (62), et la moyenne des 10 rapports d'entrée de caoutchouc est utilisée comme étant le rapport d'entrée du caoutchouc d'enrobage (64) dans le câblé de carcasse (62).

3. Pneumatique (22) selon la revendication 1 ou 2, dans lequel, dans un état où le pneumatique (22) est monté sur une jante standardisée (R), où une pression interne du pneumatique (22) est ajustée à une pression interne standardisée, et où aucune charge n'est appliquée sur le pneumatique (22),
un rapport d'une hauteur de section transversale du pneumatique (22) sur une largeur de section transversale du pneumatique (22) n'est pas inférieur à 90 %.

4. Pneumatique (22) selon l'une quelconque des revendications 1 à 3, dans lequel une épaisseur (T) d'un composant de caoutchouc situé entre le câblé de carcasse (62) et la surface intérieure du pneumatique (22) n'est pas inférieure à 4,5 mm.
